# EUROPÄISCHE PATENTANMELDUNG

(11) **EP 1 182 473 A2**
(43) Veröffentlichungstag der Anmeldung: **27.02.2002**
(21) Anmeldenummer: 01440224.2
(22) Anmeldetag: 17.07.2001
(51) Int. Cl.: G02B 6/12

(54) **Doppelbrechungsfreie passive optische Komponente**

(30) Priorität: 23.08.2000 DE 10041174
(71) Anmelder: ALCATEL, 75008 Paris (FR)
(72) Erfinder: Klekamp, Axel Dr., 71706 Markgröningen (DE); Wischmann, Wiltraud, Dr., 71706 Markgröningen (DE); Kilian, Arnd, Dr., 10117 Berlin (DE)
(74) Vertreter: Rausch, Gabriele, Dr.

(57) **Zusammenfassung**

Die Herstellung von optischen Wellenleitern auf Wellenleitersockeln, die z.B. aus einer entsprechend strukturierten Pufferschicht ausgebildet werden, verringert die Doppelbrechung, die durch thermisch induzierte Spannungen beim Glasherstellungsprozess entsteht. Daher kann die Konzentration an Dotierstoffen (z.B. Bor-Atome) in der Deckschicht zur Erzielung einer doppelbrechungsfreien optischen Komponente reduziert werden, da nicht mehr eine vollständige Anpassung des thermischen Ausdehnungskoeffizienten des Glases an den des Silizium-Substrats notwendig ist. Dies hat den enormen Vorteil, dass optische Komponenten, die solche optischen Wellenleiter aufweisen, langfristig gegen äußere Einflüsse stabil bleiben.

## Beschreibung

Die Erfindung bezieht sich auf einen optischen Wellenleiter nach dem Oberbegriff des Anspruches 1, eine optische Komponente nach dem Oberbegriff des Anspruches 7 sowie zwei Verfahren zur Herstellung eines solchen Wellenleiters nach den Oberbegriffen der Ansprüche 8 und 11.

Optische Glaswellenleiter, die in optischen Komponenten wie z.B. einem Wellenleiterphasengitter ("arrayed waveguide grating, AWG"), einem Richtkoppler oder einem Sternkoppler verwendet werden, werden durch Strukturierung einer z. B. mit Bor, Phosphor oder Germanium dotierten Kernschicht ("core layer") hergestellt. Dabei wird diese Kernschicht auf eine Pufferschicht ("buffer layer") aufgelegt. Letztere besteht z.B. aus Silikat (SiO₂) und wird durch Oxidation unter Hochdruckdampf auf einem Silizium-Substrat (Si) gewachsen. Diese Pufferschicht dient zur Isolierung der Kernschicht vom Silizium-Substrat, das eine sehr hohe Brechzahl aufweist. Die optischen Wellenleiter werden z.B. durch Trockenätzen in die Kernschicht strukturiert, und danach mit einer Deckschicht ("cladding layer") von mehreren µm-Dicke aus mit Bor, Phosphor oder Germanium dotiertem Silikat-glas überdeckt.

Solche planaren optischen Wellenleiter in Silikat-Gläsern haben vielfältige Anwendungen in optischen Komponenten für die Telekommunikation. Im allgemeinen sind jedoch diese Glasschichten und damit auch die daraus hergestellten optischen Komponenten nicht doppelbrechungsfrei. Dies führt zu unkontrollierbaren polarisationsabhängigen Verlusten in optischen Systemen, die für eine einwandfreie Funktion nicht zulässig sind.

Es ist inzwischen bekannt, dass die Doppelbrechung im optischen Wellenleiter, die dazu führt, dass die TE-Welle (elektrische transversale Komponente der elektromagnetischen Welle) des optischen Signals sich gegenüber der TM-Welle (magnetische transversale Komponente der elektromagnetischen Welle) mit einer unterschiedlichen Geschwindigkeit im Wellenleiter fortpflanzt, auf die Verwendung von Silizium als Substrat zurückzuführen ist. Allgemein führen die unterschiedlichen thermischen Ausdehnungskoeffizienten von Glasschicht und Substratmaterial bei den Hochtemperaturprozessen der Glasherstellung zu thermisch induzierten Spannungen in der Glasschicht, die zur Doppelbrechung führen.

Die Verwendung eines Glassubstrats (SiO₂) anstelle Silizium ermöglicht die Spannung und damit die Doppelbrechung zu vermindern, doch ist sie immer noch zu hoch für praktische Anwendungen (S. Suzuki, Y. Inoue and Y. Ohmori, Electr. Lett., vol. 30, no.8 (1994) pp. 642-643). Auch ist ein Verfahren bekannt, bei dem nachträglich in mehreren zusätzlichen Prozessschritten Gruben in die fertige optische Komponente geätzt werden, um die Spannungen zu kompensieren (E. Wildermuth et al, Electronics Lett., vol. 34, no.17 (1998) pp. 1661-1662).

Hier wird aber ein Verfahren angestrebt, dass die Doppelbrechung schon bei der Herstellung der Glasschichten und Wellenleitern ohne zusätzliche Prozessschritte kompensiert. Aufbauend auf die Veröffentlichungen von S. Suzuki et al, Electronics Lett. Vol.33, no. 13 pp. 1173-1174 und S.M. Ojha et al., Electr. Lett. 34(1), (1998) pp. 78 ist in dem Artikel von Kilian et al, J. Lightw. Technol. vol. 18(2), (2000), pp 193 ein Verfahren beschrieben, um doppelbrechungsfreie planare optische Wellenleiter herzustellen. Das Verfahren beruht auf der Verwendung der Flammhydolyse ("flame hydrolysis deposition, FHD") zur Überdeckung der Wellenleiter mit einer Deckschicht. Die Deckschicht besteht dabei aus hochdotiertem Silikat-Glas SiO₂. Als Dotierstoffe kommen zum Beispiel Bor und Phosphor für die Einstellung des Brechungsindexes in Frage. Die verwendete Menge Bor-Atome ermöglicht die thermische Ausdehnung der Deckschicht soweit zu erhöhen, dass Deckschicht und Siliziumsubstrat etwa gleiche thermische Ausdehnungskoeffizienten aufweisen. Es konnte gezeigt werden, dass optische Wellenleiter doppelbrechungsfreie Eigenschaften aufweisen, wenn die thermischen Ausdehnungskoeffizienten der Deckschicht und des Substrats gleich sind.

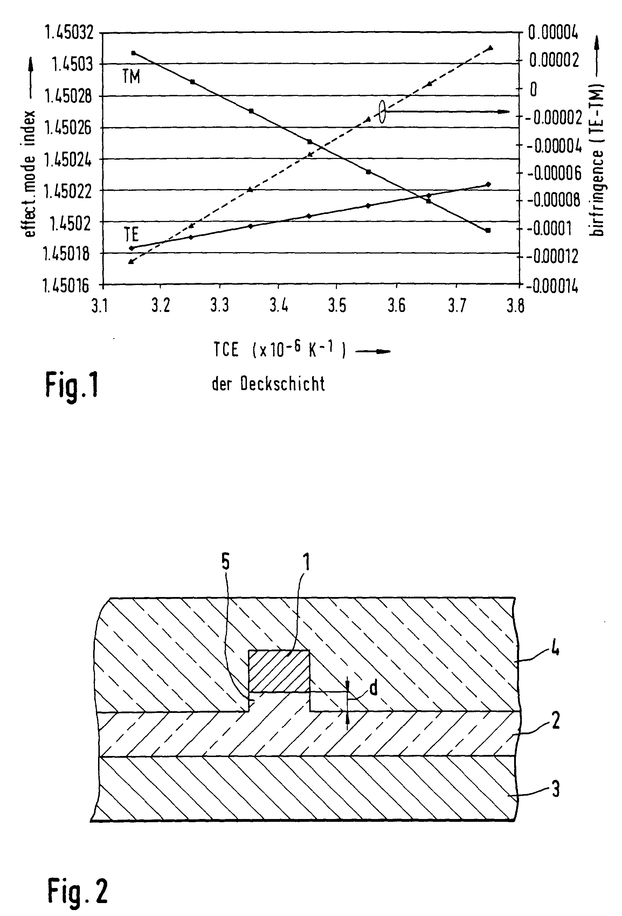

Dieses Ergebnis wurde mit Hilfe von Spannungs- und Modensimulation berechnet und ist in Fig. 1 dargestellt. Fig. 1 zeigt die effektiven Brechungsindizes der TE- und TM-Modi sowie die resultierende Doppelbrechung (Differenz der Modenindizes n_{TE} - n_{TM}) versus dem thermischen Ausdehnungskoeffizienten der Deckschicht. Bei einem thermischen Ausdehnungskoeffizienten der Deckschicht von 3,65 x 10⁻⁶ K⁻¹, der fast dem Wert des thermischen Ausdehnungskoeffizienten des Silizium-Substrats von 3,6 x 10⁻⁶ K⁻¹ entspricht, ist die resultierende Doppelbrechung null.

Die dabei verwendete Menge an Bor-Atome als Dotierstoff, um einen doppelbrechungsfreien Wellenleiter zu erzielen, führt zu einer Empfindlichkeit der dotierten Deckschicht gegenüber Feuchtigkeit. Dadurch werden optische Module, die mit einer solchen Deckschicht versehen werden, instabil bezüglich Feuchtigkeit, die sogar zu einer Zerstörung der Deckschicht (Auskristallisation) und damit der gesamten optischen Komponente führen kann. Eine Lösung hierfür ergibt sich, wenn eine zusätzliche Schutzschicht auf die Deckschicht aufgebracht wird, jedoch kann dann weiterhin die Feuchtigkeit die Deckschicht an den Kanten solcher optischer Module angreifen.

Der Erfindung liegt die Aufgabe zugrunde, optische Wellenleiter in optischen Modulen integriert herzustellen, die eine so gering wie mögliche Doppelbrechung aufweisen, wobei diese Eigenschaft bezüglich der Doppelbrechung und die Komponente bezüglich Feuchtigkeit langfristig stabil bleibt.

Die Aufgabe wird erfindungsgemäß durch einen optischen Wellenleiter nach der Lehre des Anspruches 1, eine optische Komponente nach der Lehre des Anspruches 7 sowie durch ein Verfahren zum Herstellen eines optischen Wellenleiters nach der Lehre des Anspruches 8 und ein Verfahren zum Herstellen eines optischen Wellenleiters nach der Lehre des Anspruches 11 gelöst.

Das Aufbringen eines optischen Wellenleiters entlang einer streifenförmig strukturierten Pufferschicht, die als Wellenleitersockel ausgebildet ist, ermöglicht eine Reduzierung des thermischen Ausdehnungskoeffizienten der Deckschicht bei gleichzeitigem doppelbrechungskompensiertem Wellenleiter. Dementsprechend ist die Menge an Dotierstoffen (z.B. Bor-Atome) für die Deckschicht nicht mehr so groß zu wählen. Dies hat den enormen Vorteil, dass optische Komponenten, die solche optische Wellenleiter aufweisen, langfristig doppelbrechungsfrei für in den optischen Wellenleitern übertragenen optischen Signalen bleiben und die Deckschicht feuchteresistent ist.

Die Erfindung minimiert auf einfache Art und Weise die negativen Auswirkungen, die sich aus dem Unterschied zwischen den Ausdehnungskoeffizienten des Substrats und des Wellenleiters ergeben. Dazu reicht es im Idealfall aus, einen Wellenleitersockel einer gewissen Dicke vorzusehen. Vorteilhafterweise wird zusätzlich eine geeignete Deckschicht ausgewählt, z.B. bei einer dotierten Decksicht die Dotierung geeignet gewählt, um die Minimierung zu optimieren. Als Substrat kann z.B. Silizium, Quarzglas, Keramik oder ein Polymer verwendet werden. Als Deckschicht wird z.B. ein optisches Material, ein amorphes optisches Material, Glas oder ein Polymer verwendet. Als Wellenleiter wird z.B. ein optisches Material, ein amorphes optisches Material, Glas oder ein Polymer verwendet. Als Pufferschicht wird z.B. ein optisches Material, ein amorphes optisches Material, Glas oder ein Polymer verwendet. Der Wellenleitersockel wird in einer Ausgestaltung aus der bereits gebildeten Pufferschicht gebildet, z.B. durch Ätzen. Der Wellenleitersockel ist demnach aus dem gleichen Material wie die Pufferschicht.

Vorteilhafte Ausgestaltungen der Erfindungen ergeben sich aus den abhängigen Ansprüchen, der nachfolgenden Beschreibung und den Zeichnungen.

Zwei Ausführungsbeispiele der Erfindung werden nun unter Zuhilfenahme der Figuren 1 bis 5 erläutert.

### Es zeigen:

- Fig. 1: eine graphische Darstellung des effektiven Brechungsindex für TE- und TM-Modi und die resultierende Doppelbrechung von einem optischen Signal in einem nach dem Stand der Technik hergestellten optischen Wellenleiter in Abhängigkeit des thermischen Ausdehnungskoeffizienten (TCE) der Deckschicht,
- Fig. 2: einen Querschnitt eines erfindungsgemäßen optischen Wellenleiters,
- Fig. 3: eine graphische Darstellung von dem effektiven Brechungsindizes der TE- und TM-Modi eines optischen Signals, das in dem erfindungsgemäßen optischen Wellenleiter übertragen wird, sowie die resultierende Doppelbrechung in Abhängigkeit der Dicke des Wellenleitersockels der Pufferschicht,
- Fig. 4: eine graphische Darstellung der Dicke des Wellenleitersockels der Pufferschicht in Abhängigkeit des thermischen Ausdehnungskoeffizienten (TCE) der Deckschicht des erfindungsgemäßen optischen Wellenleiters, und
- Fig. 5: einen Querschnitt von drei erfindungsgemäßen optischen Wellenleitern.

Das erste Ausführungsbeispiel wird nun anhand der Figuren 1 bis 4 erläutert. Wie im Stand der Technik bis jetzt bekannt und aus der graphischen Darstellung in Fig. 1 eindeutig zu erkennen ist, ist bei optischen Wellenleitern, die auf einem Silizium-Substrat aufgebaut sind, nur dann Doppelbrechungsfreiheit zu erreichen, wenn der Ausdehnungskoeffizient der Deckschicht ungefähr den gleichen Wert wie der vom Silizium-Substrat hat. Bei einem Wert von 3,6 x 10⁻⁶ K⁻¹ für den thermischen Ausdehnungskoeffizienten des Silizium-Substrats muss die Deckschicht einem Ausdehnungskoeffizienten von 3,65 x 10⁻⁶ K⁻¹ aufweisen; K=Kelvin.

In Fig. 2 ist ein erfindungsgemäßer optischer Wellenleiter 1 einer optischen Komponente wie z.B. einem Sternkoppler, Richtkoppler oder einem Wellenleiterphasengitter im Querschnitt gezeigt. Dabei ist dieser optische Wellenleiter 1 in einer Kernschicht ("core layer") geätzt. Diese Kernschicht liegt auf einer Pufferschicht 2 ("buffer layer"), die selbst auf einem Silizium-Substrat 3 aufgebracht ist. Sowohl der Wellenleiter 1 als auch mindestens Teile der restlich frei gebliebenen Pufferschicht 2 sind von einer Deckschicht 4 bedeckt. Die Deckschicht 4 besteht aus einem glasartigen Material, vorteilhafterweise Silikat (SiO₂), das entsprechend mit Dotierstoffen dotiert wird. Hierbei werden hauptsächlich Bor-Atome verwendet, um den thermischen Ausdehnungskoeffizienten des Silikats zu erhöhen, bis der erfindungsgemäße optische Wellenleiter 1 doppelbrechungsfreie Eigenschaften aufweist. Zusätzlich zu den Bor-Atomen werden auch gegebenenfalls andere Dotierstoffe verwendet, wie z.B. Phosphor-Atome, um den Brechungsindex einstellen zu können.

Wie aus der Fig. 2 hervorgeht, liegt der erfindungsgemäße optische Wellenleiter 1 nicht direkt auf einer planaren Fläche der Pufferschicht 2, sondern auf einem streifenförmigen Wellenleitersockel 5 dieser Pufferschicht 2. Dementsprechend liegt der erfindungsgemäße optische Wellenleiter 1 direkt auf diesem Wellenleitersockel 5, die sich wie der optischen Wellenleiter 1 in Längsrichtung über die gesamte optische Komponente erstreckt (auf Figur 2 nicht gezeichnet).

Dieser Wellenleitersockel 5 der Pufferschicht 2 entsteht vorteilhafterweise beim Ätzen (z.B. Trockenätzen) des optischen Wellenleiters 1 aus der Kernschicht. Die Dicke d dieses Wellenleitersockels 5 kann unterschiedlich gewählt werden, in Abhängigkeit der Tiefe des über die Kernschicht bis in die Pufferschicht 2 angewandten Ätzprozesses. Es hat sich herausgestellt, dass das Aufbringen von den optischen Wellenleitern 1 auf solche streifenförmigen Wellenleitersockeln 5 dazu führt, dass die darauf überdeckende Deckschicht 4 einen kleineren thermischen Ausdehnungskoeffizienten für doppelbrechungsfreie optische Wellenleiter 1 benötigt. Dadurch kann die Menge an Dotierstoffen, vorteilhafter weise Bor-Atome, geringer gewählt werden, um eine Deckschicht zu bekommen, die den gewünschten thermischen Ausdehnungskoeffizienten aufweist. Die Deckschicht 4 bedeckt vollständig den optischen Wellenleiter 1 sowie die Seiten des streifenförmigen Wellenleitersockels 5.

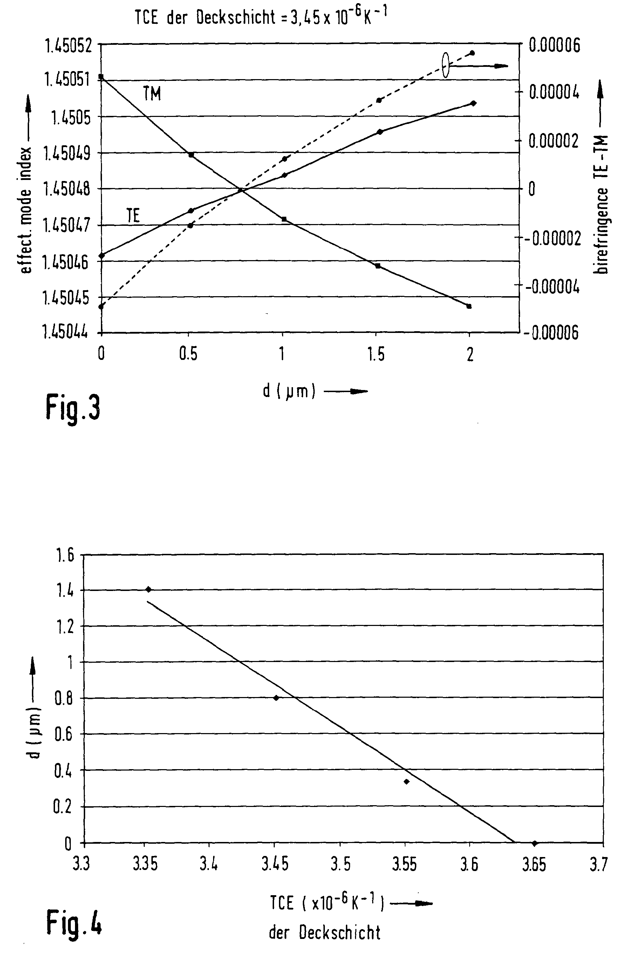

Fig. 3 zeigt eine graphische Darstellung der effektiven Brechungsindizes der TE-, TM-Modi sowie die resultierende Doppelbrechung (gegeben durch die Subtraktion des effektiven Brechungsindex des TE-Modus mit dem des TM-Modus) in Abhängigkeit der Dicke *d* der Wellenleitersockels 5 aus der Pufferschicht 2 für einen gegenüber dem Silizium-Substrat (3.6*x*10⁻⁶ K⁻¹) erniedrigten thermischen Ausdehnungskoeffizienten der Deckschicht 4 von 3.45*x*10⁻⁶ K⁻¹. Die graphische Darstellung in Fig. 3 zeigt, dass der optische Wellenleiter 1 eine doppelbrechungsfreie Eigenschaft aufweisen wird, wenn der Wellenleitersockel eine Dicke von 0,8 µm aufweist.

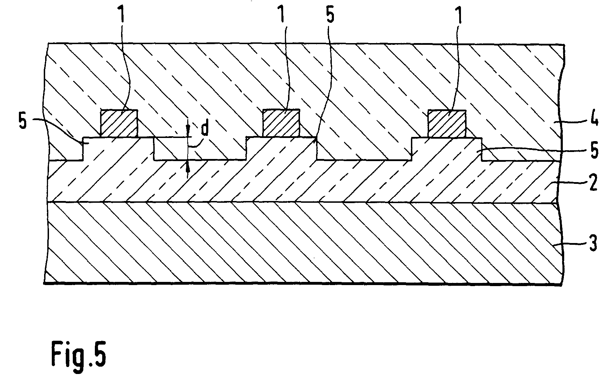

Es ist durchaus möglich, doppelbrechungsfreie optische Wellenleiter mit einer Deckschicht herzustellen, die einen noch kleineren thermischen Ausdehnungskoeffizienten aufweisen. Z.B. für eine Dicke des Wellenleitersockels von 1.1 µm wird der daraufliegende optische Wellenleiter 1 doppelbrechungsfreie Eigenschaften aufweisen, wenn der thermische Ausdehnungskoeffizient der Deckschicht nur 3.35*x*10⁻⁶ K⁻¹ erreicht, wie dies in Fig. 4 gezeigt ist. Graphisch dargestellt ist in Fig. 4 die Dicke des Wellenleitersockels 5 in µm in Abhängigkeit des thermischen Ausdehnungskoeffizienten der Deckschicht für doppelbrechungsfreie Wellenleiter, die mit einem Vorfaktor von 10⁻⁶ skaliert wird.

Dank solcher Erkenntnisse bezüglich des Einflusses eines Wellenleitersockels auf den daraufliegenden optischen Wellenleiter kann ein Verfahren zur Herstellung von solchen optischen Wellenleitern in optischen Komponenten wie z.B. Sternkoppler, Richtkoppler oder Wellenleiterphasengitter gewählt werden, bei dem die Menge der Fremdatome (Dotierstoffe) abhängig von der Dicke d des Wellenleitersockels 5 gewählt wird. Dabei werden umso weniger Fremdatome verwendet je größer die Dicke d dieses Wellenleitersockels ist. In ähnlicher Art und Weise wird der thermische Ausdehnungskoeffizient der Deckschicht abhängig von der Dicke d des Wellenleitersockels 5 gewählt. In diesem Fall ist der thermische Ausdehnungskoeffizient der Deckschicht 4 um so kleiner (im Vergleich zum thermischen Ausdehnungskoeffizienten des Substrats) je größer diese Dicke d gewählt ist.

Die Wahl optische Wellenleiter auf einem Wellenleitersockel der Pufferschicht zu strukturieren, ermöglicht vorteilhafterweise weniger Fremdatome (Dotierstoffe) für die Deckschicht zu verwenden. Hiermit befreit man sich von dem großen Nachteil der Empfindlichkeit gegenüber der Feuchtigkeit von Deckschichten, die z.B. mit Bor-Atomen dotiert wurden. Somit gelingt es optische Wellenleiter herzustellen, die in der Zeit eine stabile doppelbrechungsfreie Eigenschaft aufweisen, ohne dabei zusätzliche Herstellungsschritte wie z.B. eine zusätzliche Schutzschicht zu benötigen.

Beim ersten Ausführungsbeispiel ist die Breite des Wellenleitersockels gleich der Breite des Wellenleiters. Alternativ können Wellenleiter und Wellenleitersockel auch unterschiedliche Breiten aufweisen. Die Herstellung der unterschiedlichen Breiten erfolgt durch mindestens einen zusätzlichen, geeigneten Strukturierungsprozess, z.B. Maskieren und/oder Ätzen. Für einen gegenüber dem Wellenleiter breiteren Wellenleitersockel würde z.B. nach dem Strukturieren des Wellenleiters der Wellenleiter und ein Teilbereich der Pufferschicht abgedeckt und anschließend der Wellenleitersockel durch Ätzen des nicht abgedeckten Teilbereichs der Pufferschicht gebildet.

Das zweite Ausführungsbeispiel wird nun anhand von Fig. 5 erläutert. Fig. 5 zeigt einen Querschnitt von drei erfindungsgemäßen optischen Wellenleitern. Auf einem Substrat 3 ist eine Pufferschicht 2 aufgebracht. Auf der Pufferschicht 2 sind drei Wellenleitersockel 5 strukturiert, wobei die Wellenleitersockel 5 aus dem gleichen Material wie die Pufferschicht 2 gebildet sind. Die Wellenleitersockel 5 entstehen z.B. durch Ätzen der Pufferschicht, wobei die Tiefe der Ätzung dabei der Dicke d entspricht. Die drei Wellenleiter 1 sind auf den drei Wellenleitersockeln strukturiert. Bei der Herstellung werden die drei Wellenleiter 1 z.B. zunächst auf die Pufferschicht 2 strukturiert, aus der dann anschließend durch Abdecken und Ätzen die Wellenleitersockel 5 gebildet werden. Die Wellenleitersockel 5 haben im zweiten Ausführungsbeispiel eine gegenüber den Wellenleitern 1 größere Breite. In Fig. 5 ist ein Querschnitt gezeigt. In Längsrichtung können sich die Wellenleiter 1 z.B. geradlinig, geschwungen, schlangenförmig oder auf andere Art und Weise ausbreiten. Unabhängig von ihrer Ausbreitungsart in Längsrichtung werden diese Typen von Wellenleitern als streifenförmige Wellenleiter bezeichnet. Idealerweise sind die Breiten der Wellenleitersockel 5 an die Breiten der Wellenleiter 1 in Längsrichtung angepasst. Weisen Wellenleiter 1 und Wellenleitersockel 5 z.B. die gleichen Breiten auf und breiten sich die Wellenleiter 1 in Längsrichtung geschwungen aus, so weisen die Wellenleitersockel 5 ein diesem geschwungenen Profil angepasstes Profil in Längsrichtung auf. Im Falle des Ätzens der Wellenleiterprofile und Wellenleitersockelprofile in einem Strukturierungsschritt bildet sich dieses geschwundene Profil automatisch entsprechend angepasst aus. Auf Pufferschicht 2, Wellenleitersockel 5 und Wellenleiter 1 ist abschließend eine Deckschicht 4 aufgebracht.

In den beiden Ausführungsbeispielen ist der Wellenleitersockel aus dem gleichen Material wie die Pufferschicht. Alternativ kann der Wellenleitersockel auch aus einem anderen Material bestehen. Das Material des Wellenleitersockels wird so gewählt, dass es die optische Lichtführung nicht beeinflusst. Als Material kann z.B. jedes dotierte Material verwendet werden, dass einen gleichen Brechungsindex und eine ähnliche Erweichungstemperatur aufweist wie die Pufferschicht. Bei der Herstellung wird dann z.B. auf die Pufferschicht zunächst eine zweite Pufferschicht, die der Bildung des Wellenleitersockels dient, strukturiert und anschließend die Wellenleiterschicht. Durch einen Ätzprozess wird dann in einem einstufigen oder einem zweistufigen Verfahren der Wellenleiter und der Wellenleitersockel gebildet. Das einstufige Verfahren wird verwendet, um einen Wellenleiter und einen Wellenleitersockel gleicher Breite auszubilden; das einstufige Verfahren wird verwendet, um einen Wellenleiter und einen Wellenleitersockel unterschiedlicher Breite auszubilden. Alternativ kann anstelle der zweiten Pufferschicht nur eine Pufferschicht verwendet werden, die in der Dicke d geeignet dotiert wird. Aus dem dotierten Bereich wird dann der Wellenleitersockel ausgebildet.

## Patentansprüche

1. Optischer Wellenleiter (1), der in einer Kernschicht strukturiert ist, die auf einer Pufferschicht (2) liegt und von einer Deckschicht (4) bedeckt ist, wobei die Pufferschicht (2) auf einem Substrat (3) aufgebracht ist, **dadurch gekennzeichnet, dass**
zwischen Pufferschicht (2) und optischem Wellenleiter (1) ein streifenförmiger Wellenleitersockel (5) der Dicke d ausgebildet ist, der seitlich vollständig von der Deckschicht (4) bedeckt ist, und auf dem der optische Wellenleiter (1) strukturiert ist, und die Deckschicht (4) aus einem glasartigen Material besteht, das mit Fremdatomen dotiert ist, um den optischen Wellenleiter (1) eine doppelbrechungsfreie Eigenschaft zu verleihen.

2. Optischer Wellenleiter nach Anspruch 1, **dadurch gekennzeichnet, dass** der streifenförmige Wellenleitersockel (5) aus der Pufferschicht (2) ausgebildet ist.

3. Optischer Wellenleiter nach Anspruch 1, **dadurch gekennzeichnet, dass** der streifenförmige Wellenleitersockel (5) die gleiche Breite wie der darauf liegende optische Wellenleiter (1) aufweist.

4. Optischer Wellenleiter nach Anspruch 1, **dadurch gekennzeichnet, dass** die Dicke *d* 0,2 bis 2µm beträgt.

5. Optischer Wellenleiter nach Anspruch 1, **dadurch gekennzeichnet, dass** die Deckschicht (4) aus Silikat besteht.

6. Optischer Wellenleiter nach Anspruch 1, **dadurch gekennzeichnet, dass** die Deckschicht (4) Bor-Atome als Fremdatome aufweist.

7. Optische Komponente, die auf einem Substrat (3) aufgebaut ist und mindestens teilweise mit einer Deckschicht (4) versehen ist,
**dadurch gekennzeichnet, dass**
die optische Komponente einen optischen Wellenleiter (1) nach Anspruch 1 aufweist.

8. Verfahren zum Herstellen eines optischen Wellenleiters (1), bei dem auf ein Substrat (3) eine Pufferschicht (2) aufgebracht wird, auf der eine Kernschicht aufgebracht wird, wobei der optische Wellenleiter (1) in die Kernschicht einstrukturiert wird,
**dadurch gekennzeichnet, dass**
unterhalb des optischen Wellenleiters (1) ein streifenförmiger Wellenleitersockel (5) der Dicke *d* aus der Pufferschicht (2) ausgebildet wird, und dass anschließend sowohl der optische Wellenleiter (1) als auch der nicht vom Wellenleiter bedeckte Teil des Wellenleitersockels (5) von einer Deckschicht (4) bedeckt wird.

9. Verfahren zum Herstellen eines optischen Wellenleiters (1) nach Anspruch 8, **dadurch gekennzeichnet, dass** die Deckschicht (4) aus einem glasartigen Material besteht und mit Fremdatomen dotiert wird und die Menge der Fremdatome bei der Dotierung der Deckschicht abhängig von der Dicke *d* des streifenförmigen Wellenleitersockels (5) gewählt wird, wobei um so weniger Fremdatome verwendet werden, je größer die Dicke *d* ist.

10. Verfahren zum Herstellen eines optischen Wellenleiters (1) nach Anspruch 8, **dadurch gekennzeichnet, dass** der thermische Ausdehnungskoeffizient der Deckschicht (4) abhängig von der Dicke *d* des streifenförmigen Wellenleitersockels (5) gewählt wird, wobei er um so kleiner gewählt wird, je größer die Dicke *d* ist.

11. Verfahren zum Herstellen eines optischen Wellenleiters (1), bei dem auf ein Substrat (3) eine Pufferschicht (2) aufgebracht wird, auf der eine Kernschicht aufgebracht wird, wobei der optische Wellenleiter (1) in die Kernschicht einstrukturiert wird,
**dadurch gekennzeichnet, dass**
vor dem Aufbringen der Kernschicht eine weitere Pufferschicht auf die Pufferschicht (2) aufgebracht wird, aus der ein streifenförmiger Wellenleitersockel (5) der Dicke *d* ausgebildet wird, und dass anschließend sowohl der optische Wellenleiter (1) als auch der nicht vom Wellenleiter bedeckte Teil des Wellenleitersockels (5) von einer Deckschicht (4) bedeckt wird.
